## Europäisches Patentamt
## European Patent Office
## Office européen des brevets

(19)

(11) Veröffentlichungsnummer: **0 061 087**
**B1**

(12) **EUROPÄISCHE PATENTSCHRIFT**

(45) Veröffentlichungstag der Patentschrift:
**10.04.85**

(51) Int. Cl.⁴: **B 23 B 25/06**, B 23 Q 23/00

(21) Anmeldenummer: **82101995.7**

(22) Anmeldetag: **12.03.82**

(54) **Messeinrichtung für numerisch gesteuerte Drehmaschinen.**

(30) Priorität: **14.03.81 DE 3109903**

(43) Veröffentlichungstag der Anmeldung:
**29.09.82 Patentblatt 82/39**

(45) Bekanntmachung des Hinweises auf die Patenterteilung:
**10.04.85 Patentblatt 85/15**

(84) Benannte Vertragsstaaten:
**CH FR GB LI**

(56) Entgegenhaltungen:
**DE - A - 1 552 409**
**DE - A - 2 002 546**
**DE - A - 2 239 850**
**DE - A - 2 546 508**
**DE - B - 2 104 534**
**DE - U - 8 107 471**

(73) Patentinhaber: **Gebr. Brinkmann GmbH Maschinen- und Zahnräderfabrik, Remmighauser Strasse 85,
D-4930 Detmold (DE)**

(72) Erfinder: **Meier, Fritz, Remmighauser Strasse 61,
D-4930 Detmold (DE)**

(74) Vertreter: **Thielking, Bodo, Dipl.-Ing. et al, Patentanwälte Dipl.-Ing. Bodo Thielking Dipl.-Ing. Otto Elbertzhagen Gadderbaumer Strasse 20, D-4800 Bielefeld 1 (DE)**

## Beschreibung

Die Erfindung betrifft eine Messeinrichtung gemäss Oberbegriff von Anspruch 1.

Eine solche Messeinrichtung ist mit der DE-A-2 002 546 bekanntgeworden.

Drehmaschinen der eingangs genannten Art müssen bei grösster Arbeitsgenauigkeit hohe Arbeitsspindeldrehzahlen und schnelle Eilgangbewegungen des Werkzeugschlittens zulassen. Schnelle Bewegungen der Arbeitseinheiten erzeugen jedoch thermische Veränderungen der Elemente, die die Arbeitsgenauigkeit ungünstig beeinflussen.

Es ist auch bekannt, die Wärme-Längenausdehnung von Kugelrollspindeln und ihrer Lagerung durch lineare Wegmesssysteme, insbesondere in der X-Achse zu erfassen und durch eine Regelung des Vorschubmotors abzugleichen. Mit der bekannten Messeinrichtung wird jedoch ausschliesslich die Wärme-Längenausdehnung des Werkzeugschlittenantriebs erfasst. Der Wärmegang des Spindelstocks, der bei schnellaufenden Arbeitsspindeln relativ gross ist, wird von den bekannten Messsystemen nicht erfasst.

Der Erfindung liegt die Aufgabe zugrunde, eine Drehmaschine der eingangs erwähnten Art so auszubilden, dass mit einem geringen konstruktiven und steuertechnischen Aufwand die thermischen und mechanischen Störeinflüsse in der X-Achse (Durchmesserachse) kontinuierlich erfasst und kompensiert werden können.

Die Lösung dieser Aufgabe erfolgt erfindungsgemäss durch eine Einrichtung der gattungsgemässen Art mit den Merkmalen des kennzeichnenden Teiles von Anspruch 1.

Bei einer bevorzugten Ausführungsform der Erfindung besteht die Abstandsmessvorrichtung aus einer fest mit dem Spindelstock verbundenen Messstange.

Es hat sich als zweckmässig erwiesen, dass die den Abstand zwischen Werkzeugschlitten und Spindelstock messende Abstandsmessvorrichtung den jeweiligen Istwert einem zugeordneten Impulsumformer aufgibt, der mit der Regeleinrichtung des Antriebsmotors für die Kugelgewindespindel des Werkzeugschlittenantriebs verknüpft ist. Die Regeleinrichtung ist darauf ausgelegt, die Störungseinflüsse zu kompensieren, welche durch den Wärmegang der Kugelrollspindel, ihrer Lagerung oder des Spindelstocks sowie durch Einfederung oder durch Spiel des Werkzeugschlittens auftreten.

Die Lösung der gestellten Aufgabe erfolgt mit extrem einfachen Mitteln. Die erwähnten Störeinflüsse können völlig kompensiert werden.

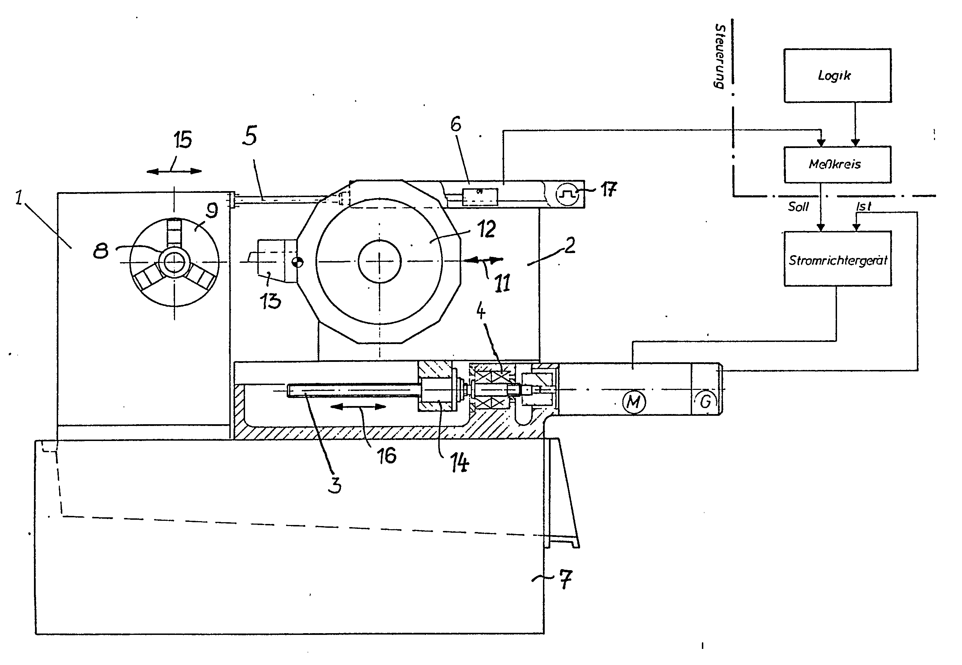

Nachstehend wird eine bevorzugte Ausführungsform der Erfindung anhand der Zeichnung im einzelnen beschrieben. Die Zeichnung zeigt eine schematische, teilweise geschnittene Frontansicht einer Drehmaschine.:

Auf dem Maschinenbett 7 ist der Spindelstock 1 angeordnet, in dem die Arbeitsspindel 8 gelagert ist, welche das Spannfutter 9 trägt.

Auf dem Maschinenbett 7 ist der Werkzeugschlitten 2 quer zur Drehachse der Arbeitsspindel 8 in Richtung des Doppelpfeils 11 verfahrbar. Auf dem Werkzeugschlitten 2 sitzt ein als Werkzeughalter 12 ausgebildeter Revolverkopf, auf dem die unterschiedlichen Werkzeuge festspannbar sind. Im dargestellten Ausführungsbeispiel ist lediglich ein Werkzeug 13 angedeutet.

Mit 3 ist die Kugelgewindespindel bezeichnet, die bei 4 frei drehbar, jedoch ortsfest, gelagert ist. Die Kugelgewindespindel 3 wird von dem Antriebsmotor M angetrieben, an dem ein Tachogenerator sitzt.

Die Spindelmutter 4 ist mit dem Werkzeugschlitten 2 verbunden und nur schematisch angedeutet.

Die wärmebedingte Ausdehnung des Spindelstocks 1 erfolgt in Richtung des Doppelpfeils 15. Der Wärmegang der Kugelgewindespindel 3 erfolgt in Richtung des Doppelpfeils 16.

Am Spindelstock 1 ist eine Messstange 5 fest angeordnet. Die Messstange wirkt mit dem Messsystem 6 zusammen, an dem ein Wegmessgeber 17 vorgesehen ist. Die Positionsregelung erfolgt in bekannter Weise. Durch ein Steuerprogramm ist ein Sollwert vorgegeben. Am Antriebsmotor M ist ein Istwertgeber (Tachogenerator G) vorgesehen. Ist- und Sollwert werden im Stromrichtergerät miteinander verbunden und bei Ungleichheiten wird der Antriebsmotor nachgeregelt.

## Patentansprüche

1. Messeinrichtung für die Kompensation von Wärmedehnungen an numerisch gesteuerten Drehmaschinen, welche einen Spindelstock (1) und einen quer zur Drehachse der Arbeitsspindel (8) verfahrbaren Werkzeugschlitten (2) aufweisen, auf dem ein Werkzeughalter angeordnet ist, mit einer den Abstand zwischen Arbeitsspindel (8) und Werkzeugschlitten (2) messenden Abstandsmessvorrichtung, welche ein fest mit dem Werkzeugschlitten (2) verbundenes Messsystem (6) aufweist, dadurch gekennzeichnet, dass ein Messelement (5) des Messsystems (6) fest mit dem Spindelstock (1) verbunden ist.

2. Messeinrichtung nach Anspruch 1, dadurch gekennzeichnet, dass das fest mit dem Spindelstock (1) verbundene Messelement eine Messstange (5) ist.

3. Messeinrichtung nach Anspruch 1 oder 2, dadurch gekennzeichnet, dass die den Abstand zwischen Werkzeugschlitten (2) und Spindelstock (1) messende Abstandsmessvorrichtung (5, 6) den Istwert einem zugeordneten Impulsumformer (17) aufgibt, der mit einer Regeleinrichtung des Antriebsmotors für die Kugelgewindespindel (3) des Werkzeugschlittenantriebs verknüpft ist.

## Claims

1. Measurement device for the compensation of thermal expansions in numerically controlled lathes which have a spindle head (1) and a tool slide (2) which can be moved transversely to the axis of rotation of the working spindle (8), on which tool slide is located a tool holder having a distance-measuring device measuring the distance between the working spindle (8) and the tool slide (2), which distance-measuring device has a measurement system (6) solidly connected to the tool slide (2), characterised in that one measurement element (5) of the measurement system (6) is solidly connected to the spindle head (1).

2. Measurement device according to Claim 1, characterised in that the measurement element solidly connected to the spindle head (1) is a measurement rod (5).

3. Measurement device according to Claim 1 or 2, characterised in that the distance-measuring device (5, 6) measuring the distance between the tool slide (2) and the spindle head (1) transmits the actual value to an associated pulse converter (17) which is connected to a control device of the driving motor for the ball screw spindle (3) of the tool slide drive.

**Revendications**

1. Dispositif de mesure pour la compensation de dilatations thermiques dans des machines à tourner à commande numérique, qui comportent une poupée fixe (1) et un chariot porte-outil (2) mobile perpendiculairement à l'axe de rotation de la broche de travail (8) et sur lequel est disposé un porte-outil, avec un dispositif de mesure de distance qui mesure la distance entre la broche de travail (8) et le chariot porte-outil (2) et qui comprend un système de mesure (6) solidement fixé au chariot porte-outil (2), caractérisé en ce qu'un élément de mesure (5) du système de mesure (6) est solidement fixé à la poupée fixe (1).

2. Dispositif de mesure suivant la revendication 1, caractérisé en ce que l'élément de mesure solidement fixé à la poupée fixe (1) est une tige de mesure (5).

3. Dispositif de mesure suivant la revendication 1 ou 2, caractérisé en ce que le dispositif de mesure de distance (5,6), qui mesure la distance entre le chariot porte-outil (2) et la poupée fixe (1), délivre la valeur réelle à un convertisiseur d'impulsions (17) incorporé, qui est relié au dispositif de réglage du moteur d'entraînement pour la broche filetée sphérique (3) de la commande du chariot porte-outil.